# EUROPEAN PATENT APPLICATION

(11) **EP 4 817 978 A1**
(43) Date of publication of application: **07.10.2026**
(21) Application number: 26156187.2
(22) Date of filing: 04.02.2026
(51) Int. Cl.: B60W 30/09, B60W 50/08, B60W 50/12

(54) **VEHICLE CONTROL APPARATUS**

(30) Priority: 01.04.2025 JP 2025060238
(71) Applicant: TOYOTA JIDOSHA KABUSHIKI KAISHA, Toyota-Shi, Aichi-Ken 471-8571 (JP)
(72) Inventor: FUKAZAWA, Kazuki, TOYOTA-SHI, AICHI, 471-8571 (JP)
(74) Representative: Cabinet Beau de Loménie

(57) **Abstract**

A vehicle control apparatus executes a collision risk reduction control when the collision risk is equal to or greater than a threshold risk. The vehicle control apparatus stores setting information defining user settings of the collision risk reduction control desired by a user of the vehicle, and identifies the user who is a driver of the vehicle. The vehicle control apparatus, in a case where the settings of the collision risk reduction control differ from the user settings of the driver, changes the settings of the collision risk reduction control to the user settings when a setting change condition is satisfied, and does not change the settings of the collision risk reduction control to the user settings when the setting change condition is not satisfied. The setting change condition is satisfied when the vehicle is stopped and the collision risk reduction control is not executed.

## Description

### TECHNICAL FIELD

The present invention relates to a vehicle control apparatus configured to execute a collision risk reduction control for reducing a collision risk of a vehicle colliding with an object.

### BACKGROUND

Conventionally, a vehicle control apparatus configured to execute a collision risk reduction control when a collision risk is equal to or greater than a threshold risk has been known. For example, a vehicle control apparatus described in Patent Document 1 (hereinafter referred to as "the conventional apparatus") controls a braking force in order to avoid a collision with an object when the collision risk is equal to or greater than the threshold risk. When it is determined that the collision with the object has been avoided, the conventional apparatus controls a driving force so as not to exceed a limit driving force.

Patent Document 1: Japanese Patent Application Laid-Open No. 2012-061932

### SUMMARY

Meanwhile, a vehicle control apparatus is known in which a driver can customize settings of the collision risk reduction control. For example, when the driver feels the collision risk reduction control to be obtrusive, the driver can set to prohibit execution of the collision risk reduction control.

When a single vehicle is shared by multiple users, there is a demand to customize the settings of the collision risk reduction control for each of the users. It takes time for the vehicle control apparatus to identify the user who is driving the vehicle, and further takes time for the vehicle control apparatus to change the settings of the collision risk reduction control to the settings of that user. On the other hand, the user desires to start the vehicle immediately after getting into the vehicle.

As a countermeasure, it is conceivable that the settings of the collision risk reduction control are changed after the vehicle starts. However, in this case, there is a possibility that the settings of the collision risk reduction control are changed at a timing unintended by the user. Furthermore, a discrepancy may occur between the settings of the collision risk reduction control assumed by the user and the actual settings of the collision risk reduction control, and if such a discrepancy occurs, the behavior of the vehicle may differ from the user's intention.

The present invention has been made in order to address the above-described problem. That is, one object of the present invention is to provide a vehicle control apparatus configured to change the settings of the collision risk reduction control at an appropriate timing, thereby reducing the possibility that the behavior of the vehicle differs from the user's intention.

A vehicle control apparatus according to the present invention (hereinafter, referred to as "the present invention apparatus") is configured to execute a collision risk reduction control for reducing a collision risk of the vehicle colliding with an object when the collision risk is equal to or greater than a predetermined threshold risk.

The collision risk reduction control includes at least one of an automatic braking control for generating a braking force in the vehicle, and a driving force limitation control for controlling a driving force generated in the vehicle such that the driving force does not exceed a limited driving force.

The vehicle control apparatus is configured to:
store setting information defining user settings of the collision risk reduction control desired by a user of the vehicle;
identify the user who is a driver of the vehicle; and
in a case where the settings of the collision risk reduction control differ from the user settings of the driver,
change the settings of the collision risk reduction control to the user settings of the driver when a setting change condition is satisfied,
   wherein the setting change condition is satisfied when the vehicle is stopped and the collision risk reduction control is not being executed, and
not change the settings of the collision risk reduction control to the user settings of the driver when the setting change condition is not satisfied.

According to the present invention apparatus, the settings of the collision risk reduction control are changed at an appropriate timing, thereby reducing the possibility that the behavior of the vehicle differs from the user's intention. For example, even if the collision risk reduction control is executed against the user's intention, the behavior of the vehicle does not change when the vehicle is stopped, so the possibility that the behavior of the vehicle differs from the user's intention can be reduced. Since the settings of the collision risk reduction control are changed when the collision risk reduction control is not being executed, it is possible to prevent execution of the collision risk reduction control from suddenly terminating against the user's intention.

### BRIEF DESCRIPTION OF THE DRAWINGS

FIG. 1 is a schematic system configuration diagram of a vehicle control apparatus according to an embodiment of the present invention.
FIG. 2 is an explanatory diagram of setting information stored in setting information storage unit shown in FIG. 1.
FIG. 3 is a flowchart illustrating a setting change routine executed by a CPU of an ECU shown in FIG. 1.
FIG. 4 is a flowchart illustrating a collision risk reduction control routine executed by the CPU of the ECU shown in FIG. 1.

### DETAILED DESCRIPTION

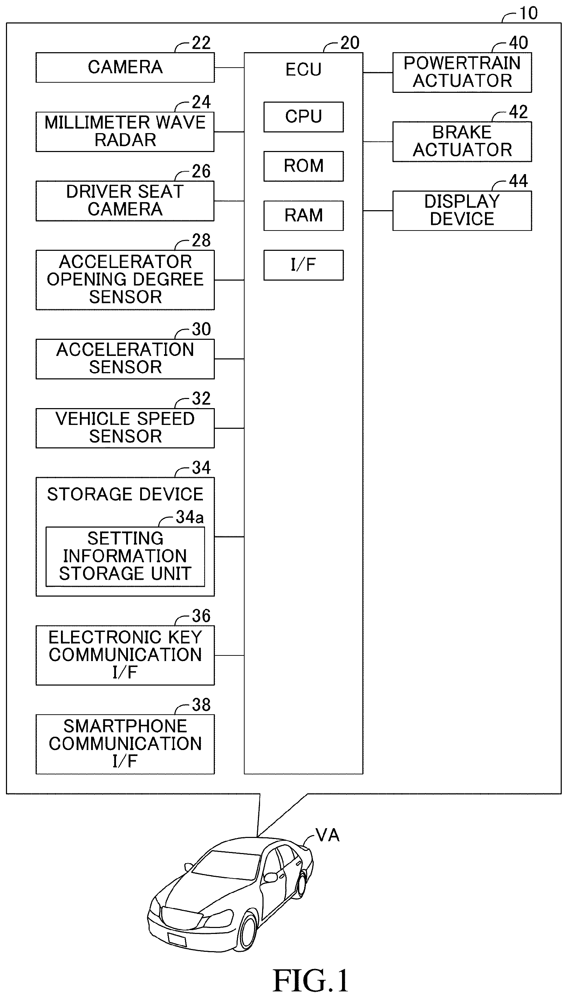

A vehicle control apparatus 10 according to an embodiment of the present invention (hereinafter referred to as "the present apparatus 10") is applied to a vehicle VA and comprises components shown in FIG. 1. In this specification, an "ECU 20" is an electronic control unit including a microcomputer as a main component. The ECU 20 is also referred to as a control unit, a controller, or a computer. The microcomputer includes a CPU (processor), ROM, RAM, an interface (I/F), and the like. Functions realized by the ECU 20 may alternatively be realized by a plurality of ECUs.

A camera 22 acquires forward image data by capturing an area in front of the vehicle VA. A millimeter-wave radar 24 receives a reflected wave of a millimeter wave transmitted forward from the vehicle VA and reflected by an object, and acquires radar data. The radar data is data regarding a position of the object relative to the vehicle VA and a relative speed of the object relative to the vehicle VA.

The ECU 20 acquires the forward image data from the camera 22 and acquires the radar data from the millimeter-wave radar 24. The ECU 20 recognizes the object in front of the vehicle VA based on the forward image data and the radar data.

A driver seat camera 26 acquires driver seat image data by capturing an area including a face of a driver seated on a driver seat of the vehicle VA. The ECU 20 acquires the driver seat image data from the driver seat camera 26.

An accelerator opening degree sensor 28 measures an accelerator opening degree AP representing an amount of depression (operation amount) of an accelerator pedal (acceleration operator) by the driver. The accelerator opening degree AP is "0" when the driver does not operate the accelerator pedal. An acceleration sensor 30 measures an acceleration G in a longitudinal direction of the vehicle VA. A vehicle speed sensor 32 measures a vehicle speed Vs representing a speed of the vehicle VA. The ECU 20 acquires measurement values of the sensors 28 to 32.

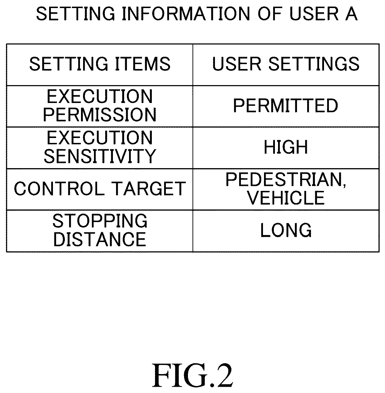

A storage device 34 has a nonvolatile storage area. In this storage area, a setting information storage unit 34a is provided. The setting information storage unit 34a stores setting information for each of at least one user who uses the vehicle VA (see FIG. 2). Details of the setting information will be described later.

An electronic key communication interface (I/F) 36 is an interface for performing wireless communication with an electronic key carried by a user. A smartphone communication interface (I/F) 38 is an interface for performing wireless communication with a smartphone carried by a user.

A powertrain actuator 40 changes a driving force generated by a driving device (for example, an internal combustion engine and/or an electric motor) of the vehicle VA. A brake actuator 42 changes a braking force applied to the vehicle VA. A display device 44 is disposed at a position visible to the driver.

### <Collision Risk Reduction Control>

The ECU 20 executes a collision risk reduction control for reducing a collision risk when the collision risk that the vehicle VA collides with the object is equal to or greater than a threshold risk. The collision risk reduction control includes at least one of an automatic braking control and a driving force limitation control. The automatic braking control is control for generating the braking force in the vehicle VA. The driving force limitation control is control for controlling the driving force such that the driving force generated in the vehicle VA does not exceed a limited driving force DImt.

In the present embodiment, when a time to collision (TTC) of the object is equal to or less than a threshold time Tth, the ECU 20 determines that the collision risk is equal to or greater than the threshold risk and executes the collision risk reduction control. The TTC represents a time until the object collides with the vehicle VA, and is an abbreviation of "Time To Collision." The ECU 20 acquires the TTC by dividing a distance between the object and the vehicle VA by the relative speed Vr of the object.

A user can set the following setting items of the collision risk reduction control:
(1) execution permission,
(2) execution sensitivity,
(3) control target, and
(4) stopping distance.

The execution permission is set to either "permitted" or "prohibited." When the execution permission is set to "permitted," execution of the collision risk reduction control is permitted. When the execution permission is set to "prohibited," execution of the collision risk reduction control is prohibited.

The execution sensitivity defines (sets) an execution timing of the collision risk reduction control. The execution sensitivity is set to any one of "high," "medium," and "low." When the execution sensitivity is set to "high," the ECU 20 sets the threshold time Tth to a first time T1. When the execution sensitivity is set to "medium," the ECU 20 sets the threshold time Tth to a second time T2 that is shorter than the first time T1. When the execution sensitivity is set to "low," the ECU 20 sets the threshold time Tth to a third time T3 that is shorter than the second time T2.

The control target defines (sets) a type of the object to be subjected to execution of the collision risk reduction control. The control target is set to at least one of a pedestrian, a vehicle, and a two-wheeled vehicle. The ECU 20 acquires the TTC of the object of the type defined by the control target and executes the collision risk reduction control when the TTC is equal to or less than the threshold time Tth.

The stopping distance defines (sets) a distance until the vehicle VA stops by the automatic braking control. The stopping distance is set to any one of "long," "medium," and "short." In the automatic braking control, the ECU 20 sets a target braking force Btgt such that the vehicle VA stops at the distance defined by the stopping distance.

For example, as shown in FIG. 2, a user A sets the execution permission to "permitted," sets the execution sensitivity to "high," sets the control target to a pedestrian and a vehicle, and sets the stopping distance to "long." The user's settings may be input by, for example, a touch operation performed on the display device 44 which is a touch-panel display. The setting information of the user A is stored in the setting information storage unit 34a. The ECU 20 also stores, in association with the setting information of the user A, the driver seat image data in which the user A appears, in the setting information storage unit 34a.

In an initialization routine, the ECU 20 initializes the setting information of the collision risk reduction control. As one example, the ECU 20 sets the execution permission to "permitted," sets the execution sensitivity to "medium," sets the control target to a pedestrian, a vehicle, and a two-wheeled vehicle, and sets the stopping distance to "medium." The initialization routine is executed when an ignition key switch (not shown) of the vehicle VA is changed from an OFF position to an ON position.

### (Outline of Operation)

When current settings of the collision risk reduction control differ from settings of a driver who drives the vehicle VA, the ECU 20 needs to change the settings of the collision risk reduction control to the user settings. In the present embodiment, when a setting change condition is satisfied, the ECU 20 changes the settings of the collision risk reduction control to the user settings of the driver. The setting change condition is satisfied when the vehicle VA is stopped and the collision risk reduction control is not being executed.

Even if the collision risk reduction control is executed while the vehicle VA is stopped, the behavior of the vehicle does not change. For example, when the settings of the collision risk reduction control are changed so that the execution permission becomes "permitted," whereas the execution permission assumed by the user is "prohibited," a discrepancy arises (occurs) between the actual settings of the collision risk reduction control and the settings assumed by the user. Even if the collision risk reduction control is executed against the user's intention while such a discrepancy exists, the behavior of the vehicle does not change as long as the vehicle VA is stopped. This can reduce the possibility that the driver feels discomfort.

Furthermore, the settings of the collision risk reduction control are changed when the collision risk reduction control is not being executed. Accordingly, even if the settings of the collision risk reduction control are changed so that the execution permission becomes "prohibited," it is possible to prevent execution of the collision risk reduction control from suddenly terminating.

### (Specific Operation)

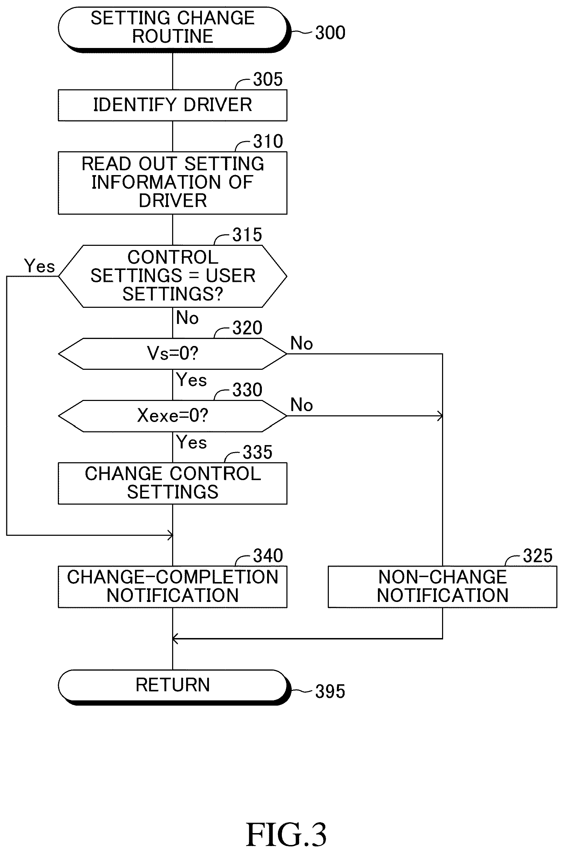

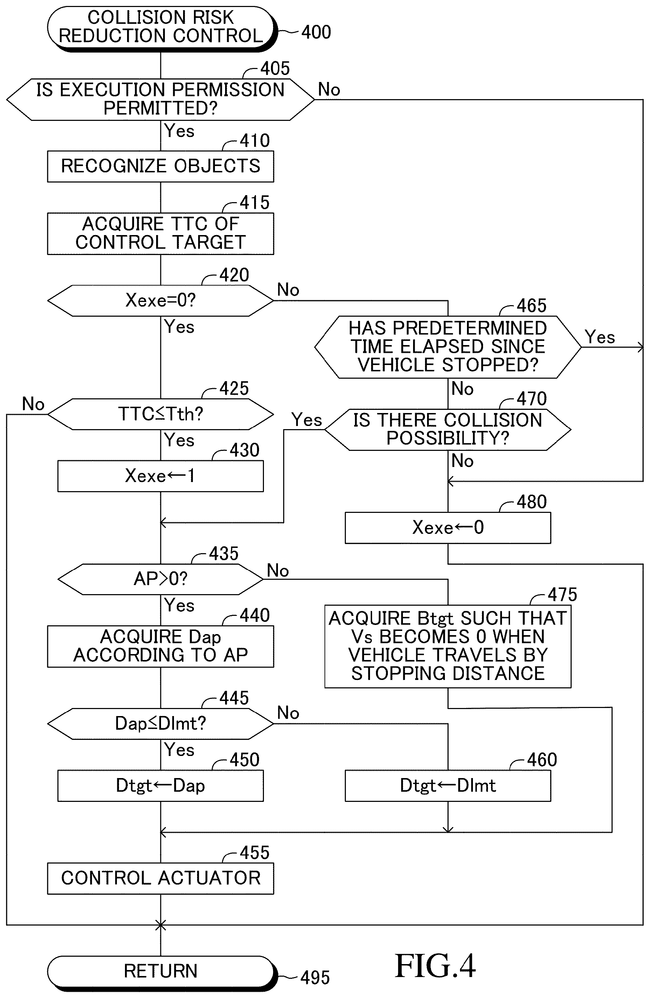

The CPU of the ECU 20 executes routines shown in flowcharts of FIGs. 3 and 4 each time a predetermined time period elapses.

### <Setting Change Routine>

When an appropriate timing arrives, the CPU starts a process from step 300 of FIG. 3 and executes step 305 to step 315.

Step 305: The CPU identifies which user is the driver. Specifically, the CPU acquires the driver seat image data from the driver seat camera 26. The CPU identifies which user is the current driver by comparing a face image included in the driver seat image data stored in the setting information storage unit 34a with a face image included in the acquired driver seat image data.

Step 310: The CPU reads out the setting information of the driver identified at step 305 from the setting information storage unit 34a.

Step 315: The CPU determines whether or not the settings of the collision risk reduction control are the same as the user settings of the setting information read out at step 310.

When the settings of the collision risk reduction control differ from the user settings, the CPU makes a "No" determination at step 315, and the process proceeds to step 320. At step 320, the CPU determines whether or not the vehicle VA is stopped (in other words, whether or not the vehicle speed Vs is "0").

When the vehicle VA is not stopped, the setting change condition is not satisfied. In this case, the CPU makes a "No" determination at step 320, and the process proceeds to step 325. At step 325, the CPU performs a non-change notification. Specifically, the CPU displays, on the display device 44, a non-change notification screen for notifying the driver that the change of the settings of the collision risk reduction control has not yet been completed. Thereafter, the process proceeds to step 395, and the CPU temporarily terminates this routine.

When the vehicle VA is stopped, the CPU makes a "Yes" determination at step 320, and the process proceeds to step 330. At step 330, the CPU determines whether or not an execution flag Xexe is "0."

The execution flag Xexe is set to "1" when the collision risk reduction control is executed and is set to "0" when the collision risk reduction control is not executed. The execution flag Xexe is set to "0" in the initialization routine.

When the execution flag Xexe is "1," the setting change condition is not satisfied. In this case, the CPU makes a "No" determination at step 330 and performs the non-change notification at step 325.

When the execution flag Xexe is "0," the setting change condition is satisfied. In this case, the CPU makes a "Yes" determination at step 330 and executes steps 335 and 340.

Step 335: The CPU changes the settings of the collision risk reduction control to the user settings.

Step 340: The CPU performs a change-completion notification. Specifically, the CPU displays, on the display device 44, a change-completion notification screen for notifying the driver that the change of the settings of the collision risk reduction control has been completed. Thereafter, the process proceeds to step 395, and the CPU temporarily terminates this routine.

When the settings of the collision risk reduction control are the same as the user settings at the time when the process proceeds to step 315, the CPU makes a "Yes" determination at step 315, and the process proceeds to step 340.

### <Collision Risk Reduction Control Routine>

When an appropriate timing arrives, the CPU starts a process from step 400 of FIG. 4, and the process proceeds to step 405. At step 405, the CPU determines whether or not the execution permission in the settings of the collision risk reduction control is set to "permitted."

When the execution permission is set to "permitted," the CPU makes a "Yes" determination at step 405 and executes steps 410 to 420.

Step 410: The CPU recognizes objects based on the forward image data and the radar data.

Step 415: The CPU acquires a TTC of the object of the type set as the control target in the settings of the collision risk reduction control.

Step 420: The CPU determines whether or not the execution flag Xexe is "0."

When the execution flag Xexe is "0," the CPU makes a "Yes" determination at step 420, and the process proceeds to step 425. At step 425, the CPU determines whether or not the TTC is equal to or less than a threshold time Tth. The threshold time Tth is set to any one of a first time T1 to a third time T3 depending on the execution sensitivity in the settings of the collision risk reduction control.

When the TTC is greater than the threshold time Tth, the CPU makes a "No" determination at step 425, and the process proceeds to step 495. At step 495, the CPU temporarily terminates this routine.

When the TTC is equal to or less than the threshold time Tth, the CPU makes a "Yes" determination at step 425 and executes steps 430 and 435.

Step 430: The CPU sets the execution flag Xexe to "1."

Step 435: The CPU determines whether or not an accelerator opening degree AP is greater than "0."

When the accelerator opening degree AP is greater than "0," the CPU makes a "Yes" determination at step 435 and executes step 440 and step 445.

Step 440: The CPU acquires an operation driving force Dap according to the accelerator opening degree AP. The operation driving force Dap increases as the accelerator opening degree AP increases.

Step 445: The CPU determines whether or not the operation driving force Dap is equal to or less than the limited driving force DImt.

When the operation driving force Dap is equal to or less than the limited driving force DImt, the CPU makes a "Yes" determination at step 445 and executes step 450 and step 455.

Step 450: The CPU sets a target driving force Dtgt to the operation driving force Dap.

Step 455: The CPU controls the powertrain actuator 40 such that a driving force generated by the driving device becomes the target driving force Dtgt. Thereafter, the processing proceeds to step 495.

When the operation driving force Dap is greater than the limited driving force DImt, the CPU makes a "No" determination at step 445, and the process proceeds to step 460. At step 460, the CPU sets the target driving force Dtgt to the limited driving force DImt.Thereafter, the processing proceeds to step 455.

In a case where the execution flag Xexe is "1" when the process proceeds to step 420, the CPU makes a "No" determination at step 420, and the process proceeds to step 465. At step 465, the CPU determines whether or not a predetermined time has elapsed since the vehicle VA stopped.

When the vehicle VA is not stopped, or when the predetermined time has not elapsed since the vehicle VA stopped, the CPU makes a "No" determination at step 465, and the process proceeds to step 470. At step 470, the CPU determines whether or not there is a collision possibility with the object of the control target. Specifically, the CPU determines that there is no collision possibility when a movement direction of the object of the control target relative to the vehicle VA no longer intersects the vehicle VA.

When there is the collision possibility, the CPU makes a "Yes" determination at step 470, and the process proceeds to step 435. When the accelerator opening degree AP is "0" (that is, when the driver is not operating the accelerator pedal), the CPU makes a "No" determination at step 435, and the process proceeds to step 475. At step 475, the CPU sets (acquires) a target braking force Btgt to a braking force such that the vehicle speed Vs becomes "0" when the vehicle VA travels by a "stopping distance defined in the settings of the collision risk reduction control." Thereafter, at step 455, the CPU controls the brake actuator 42 such that a braking force generated by a braking device becomes the target braking force Btgt. Thereafter, the process proceeds to step 495.

In a case where the predetermined time has elapsed since the vehicle VA stopped when the process proceeds to step 465, the CPU makes a "Yes" determination at step 465, and the process proceeds to step 480. At step 480, the CPU sets the execution flag Xexe to "0." Thereafter, the processing proceeds to step 495.

In a case where there is no collision possibility with the object of the control target when the process proceeds to step 470, the CPU makes a "No" determination at step 470, and the process proceeds to step 480.

In a case where the execution permission is set to "prohibited" when the process proceeds to step 405, the CPU makes a "No" determination at step 405, and the process proceeds to step 480.

As described above, according to the present embodiment, when the settings of the collision risk reduction control differ from the user settings, the ECU 20 determines whether or not the setting change condition is satisfied. It should be noted that the setting change condition is satisfied when the vehicle VA is stopped and the collision risk reduction control is not being executed. When the setting change condition is satisfied, the ECU 20 changes the settings of the collision risk reduction control to the user settings. This can reduce the possibility that the behavior of the vehicle differs from the user's intention.

### (Modified Example)

In the above embodiment, the driver is identified based on the driver seat image data; however, the identification of the driver is not limited thereto. The ECU 20 performs wireless communication with an electronic key carried by a user, in which a key identifier as a unique identifier is set, via the electronic key communication interface 36, and acquires the key identifier from the electronic key. The ECU 20 identifies which user is the driver based on the key identifier.

Similarly, the ECU 20 performs wireless communication with a smartphone carried by a user, in which a smartphone identifier as a unique identifier is set, via the smartphone communication interface 38, and acquires the smartphone identifier from the smartphone. The ECU 20 identifies which user is the driver based on the smartphone identifier.

In the above embodiment, both the driving force limitation control (steps 435 to 460) and the automatic braking control (step 475) are executed as collision risk reduction control; however, at least one of the driving force limitation control and the automatic braking control may be executed as the collision risk reduction control.

In the above embodiment, after a predetermined period has elapsed since the change-completion notification was started, the ECU 20 may not perform the change-completion notification.

When the settings of the collision risk reduction control differ from the user settings, the ECU 20 determines whether or not the user settings are settings that make it more difficult to satisfy an execution condition for executing the collision risk reduction control than the current settings of the collision risk reduction control. When the user settings are settings that make it more difficult to satisfy the execution condition than the current settings of the collision risk reduction control, the ECU 20 may determine that the setting change condition is satisfied and may change the settings of the collision risk reduction control to the user settings, even if the vehicle VA is not stopped (that is, even if the vehicle speed Vs is not "0"), as long as the collision risk reduction control is not being executed.

When the user settings are settings that make it more difficult to satisfy the execution condition than the current settings of the collision risk reduction control, the possibility that the execution condition is satisfied immediately after the collision risk reduction control is changed to the user settings is low. Therefore, immediately after the settings of the collision risk reduction control is changed to the user settings, the possibility that the collision risk reduction control is executed against the user's intention is low, and thus the possibility that the behavior of the vehicle VA differs from the user's intention is also low. Accordingly, in such a case, even if the vehicle VA is not stopped, the setting change condition may be satisfied as long as the collision risk reduction control is not being executed.

The cases where the user settings make it more difficult to satisfy the execution condition than the current settings of the collision risk reduction control include the following cases:
(i) the execution permission of the user settings is "prohibited," and the execution permission of the current settings of the collision risk reduction control is "permitted."
(ii) the execution sensitivity of the user settings is lower than the execution sensitivity of the collision risk reduction control.
(iii) the number of control targets of the user settings is smaller than the number of control targets of the collision risk reduction control, and all control targets of the user settings are included in the control targets of the collision risk reduction control.

Furthermore, the apparatus 10 only needs to include at least one of the camera 22 and the millimeter-wave radar 24.

The present apparatus 10 can be applied to (or installed in/on) an engine vehicle, a hybrid electric vehicle (HEV), a plug-in hybrid electric vehicle (PHEV), a fuel cell electric vehicle (FCEV), and a battery electric vehicle (BEV). Furthermore, the present apparatus 10 can also be applied to an autonomous driving vehicle.

## Claims

1. A vehicle control apparatus (10) configured to execute a collision risk reduction control for reducing a collision risk of the vehicle colliding with an object (step 435 to step 460, step 475) when the collision risk is equal to or greater than a predetermined threshold risk (step 425: "Yes"),
wherein the collision risk reduction control includes at least one of an automatic braking control for generating a braking force in the vehicle (step 475), and a driving force limitation control for controlling a driving force generated in the vehicle such that the driving force does not exceed a limited driving force (step 435 to step 460),
wherein the vehicle control apparatus is configured to:
store setting information defining user settings of the collision risk reduction control desired by a user of the vehicle (34a);
identify the user who is a driver of the vehicle (step 305); and
in a case where the settings of the collision risk reduction control differ from the user settings of the driver (step 315: "No"),
change the settings of the collision risk reduction control to the user settings of the driver (step 335) when a setting change condition is satisfied,
wherein the setting change condition is satisfied when the vehicle is stopped (step 320: "Yes") and the collision risk reduction control is not being executed (step 330: "Yes"), and
not change the settings of the collision risk reduction control to the user settings of the driver when the setting change condition is not satisfied (step 320: "No", step 330: "No").

2. The vehicle control apparatus according to claim 1,
wherein the user settings include a setting for permitting or prohibiting execution of the collision risk reduction control.

3. The vehicle control apparatus according to claim 1 or 2,
wherein the user settings include at least one of a setting for increasing or decreasing the threshold risk, and a setting of a type of the object to be a target of execution of the collision risk reduction control.

4. The vehicle control apparatus according to any of claims 1 to 3,
wherein the vehicle control apparatus is configured to:
notify the driver that the settings of the collision risk reduction control have not yet been changed (step 325) when the settings of the collision risk reduction control differ from the user settings of the driver (step 315: "No"); and
notify the driver that the change of the settings of the collision risk reduction control has been completed (step 340) when the settings of the collision risk reduction control are the same as the user settings of the driver (step 315: "Yes").
